# EUROPEAN PATENT APPLICATION

(11) **EP 4 450 933 A1**
(43) Date of publication of application: **23.10.2024**
(21) Application number: 23168772.4
(22) Date of filing: 19.04.2023
(51) Int. Cl.: G01J 3/02, G01J 1/02, G01N 21/3504

(54) **THERMALLY DECOUPLED PHOTOSENSITIVE DETECTOR**

(71) Applicant: trinamiX GmbH, 67063 Ludwigshafen am Rhein (DE)
(72) Inventor: OSTERMANN, Till-Jonas, 67063 Ludwigshafen am Rhein (DE)
(74) Representative: Altmann Stößel Dick Patentanwälte PartG mbB

(57) **Abstract**

The invention relates to a detector module (120) for detecting light (118) and, thereby generating at least one detector signal, wherein the detector module (120) comprises:
- at least one photosensitive detector (122) designated for generating at least one detector signal when illuminated by light (118);
- at least one spacer (124), wherein the spacer (124) supports the photosensitive detector (122) in manner that at least one thermally insulating air gap (126) is generated between the photosensitive detector (122) and at least one supporting member (128) for thermally decoupling the photosensitive detector (122) from an environment.

The invention further relates to a method for producing a detector module (120), a spectrometer device (110), a computer program, a computer-readable storage medium and a non-transient computer-readable medium.

## Description

### Field of the invention

The invention relates to a detector module for detecting light. The invention further relates to a method for producing a detector module, a spectrometer device, a computer program, a computer-readable storage medium and a non-transient computer-readable medium. Such methods, devices, computer programs and computer-readable media can, in general, be used for investigating and/or monitoring purposes, in particular in the infrared (IR) spectral region, especially in the near-infrared (NIR) and the mid-infrared spectral region. However, further kinds of applications are conceivable.

### Prior art

In practice, a spectrometer device may be subject to drifting effects which can be caused by variations of a temperature of a detector module comprised by the spectrometer device, resulting in a strong thermal drift in the measurement signal, which makes the analysis of the measurement signal difficult.

Typically, the detector modules are thermally well connected to a surrounding module. The detector module, therefore, may easily adapt the temperature of the surrounding module, which may increase the drifting effects when the temperature of the surrounding module variates.

### Problem addressed by the invention

Therefore, the problem addressed by the present invention is that of providing a spectrometer device and a method for determining at least one item of spectral information about at least one measurement object as well as a related computer program and a non-transient computer-readable medium, which at least substantially avoid the disadvantages of known devices and methods of this type.

In particular, it would be desirous to have a detector module that shows minimized drifting effects. It would further be desirous to have a method for producing a detector module, a spectrometer device, a computer program, a computer-readable storage medium and a non-transient computer-readable medium that further address these problems.

### Summary of the invention

This problem is solved by the invention with the features of the independent patent claims. Advantageous developments of the invention, which can be implemented individually or in combination, are presented in the dependent claims, in the following specification and in the detailed embodiments.

In a first aspect of the present invention, a detector module for detecting light, particularly by using a spectrometer device, and, thereby, generating a detector signal is disclosed. The detector module comprises:
- at least one photosensitive detector designated for generating at least one detector signal when illuminated by light;
- at least one spacer, particularly a plurality of spacers, wherein the spacer supports the photosensitive detector in manner that at least one thermally insulating air gap is generated between the photosensitive detector and at least one supporting member for thermally decoupling the photosensitive detector from an environment.

As already disclosed in the above, the detector module comprises at least one photosensitive detector is designated for generating at least one detector signal when illuminated by light.

The term "detector module" as used herein is a broad term and is to be given its ordinary and customary meaning to a person of ordinary skill in the art and is not to be limited to a special or customized meaning. The term specifically may refer, without limitation, refers to an arbitrary unit designated for generating at least one detector signal depending on the intensity of the light received by the sensor region. The detector signal may be associated with at least one wavelength range. The at least one detector signal may, in particular, be provided to an evaluation unit for evaluation. Particularly thereby, an item of spectroscopic information on a measurement object may be generated.

The "detector signal" may be an analogue signal and/or a digital signal. The detector signal may be selected from an electrical current or an electrical voltage; however, using an optical signal as generated by the at least one photosensitive detector may also be feasible. In a particular embodiment, the at least one detector module may be or comprise an active sensor which may be adapted to amplify the electronic signals prior to providing it, for example, to the evaluation unit. For this purpose, the detector module may comprise one or more signal processing devices, in particular one or more filters and/or analogue-digital-converters for processing and/or preprocessing the electronic signals.

The term "photosensitive detector" as used herein is a broad term and is to be given its ordinary and customary meaning to a person of ordinary skill in the art and is not to be limited to a special or customized meaning. The term specifically may refer, without limitation, refers to an optical detector which may be or may comprise at least one photosensitive region, which particularly is, depending on the illumination of the at least one photosensitive region, designated for generating the at least one detector signal. Typical types of photosensitive detector are photodiodes and/or photoresistors.

The at least one photosensitive region a may, preferably, be a single, uniform photosensitive area which is configured to receive the emitted light that impinges on the photosensitive area. However, more than one photosensitive area, such as an array of pixel-sized photosensitive areas, may also be feasible.

The photosensitive region may comprise at least one photoconductive material. The term "photoconductive material" as used herein is a broad term and is to be given its ordinary and customary meaning to a person of ordinary skill in the art and is not to be limited to a special or customized meaning. The term specifically may refer, without limitation, refers to a type of material that exhibits an increase in electrical conductivity when it is exposed to light. A photosensitive region comprising a photoconductive material device may, typically, be connected to a plurality of electrical contacts that are connected to an external circuit, particularly comprising an evaluation unit. When light is incident on the photoconductive material, it may generate free charge carriers, such as electrons and/or holes, which may increase the electrical conductivity of the material. This change in conductivity may be observed by the external circuit as an electrical signal, which may, as an example, be fed to the evaluation unit.

The photoconductive material may be or may comprise at least one inorganic photoconductive material. The photoconductive material may be or may comprise at least one of:
- lead sulfide (PbS);
- lead selenide (PbSe);
- germanium (Ge);
- indium gallium arsenide (InGaAs);
- indium antimonide (InSb);
- mercury cadmium telluride (HgCdTe or MCT).

Particularly lead sulfide (PbS) and/or lead selenide (PbSe) show a strong temperature drift characteristic. Photosensitive detectors comprising these materials thereby advantageously benefit from the invention disclosed herein.

The term "light" as used herein is a broad term and is to be given its ordinary and customary meaning to a person of ordinary skill in the art and is not to be limited to a special or customized meaning. The term specifically may refer, without limitation, to electromagnetic radiation. Light may be formed by at least one electromagnetic field wave and or at least one particle. Visible light may, usually, be defined as having a wavelength in a range of 380 to 760 nm, between the infrared and the ultraviolet. Infrared light may, typically, be defined as having a wavelength in a range above 760 nm to 1 mm.

As already disclosed in the above, the detector module comprises at least one spacer, wherein the spacer supports the photosensitive detector in manner that at least one thermally insulating air gap is generated between the photosensitive detector and at least one supporting member for thermally decoupling the photosensitive detector from an environment.

The term "spacer" as used herein is a broad term and is to be given its ordinary and customary meaning to a person of ordinary skill in the art and is not to be limited to a special or customized meaning. The term specifically may refer, without limitation, to at least one device and/or at least one material being used to create and/or preserve a space between a plurality of objects and/or surfaces. By using the spacer, the plurality of objects is separated in a manner that the objects to not contact each other. In particular accordance with the present invention, the space may be used to separate the photosensitive detector from the supporting member. Thus, the photosensitive detector and the supporting member may be separated from each other, particularly by the spacer. Thereby, a space, particularly an air gap, is generated. As an example, the photosensitive detector may be fully surrounded by air and only the spacer, particularly used as an electrical contact for providing the detector signal, may contact the photosensitive detector. In addition, a separate electrical contact may further contact the photosensitive detector.

The term "supporting member" as used herein is a broad term and is to be given its ordinary and customary meaning to a person of ordinary skill in the art and is not to be limited to a special or customized meaning. The term specifically may refer, without limitation, to at least one structural element that is designed for bearing loads and/or provide support to at least one further structural element. In particular accordance with the present invention, the supporting element carries the spacer in a manner that the photosensitive detector is mounted at a distance from the supporting member. By mounting the photosensitive detector in a distance from the supporting member an air gap is generated. The supporting member may comprise a surface for placing the spacer.

The photosensitive detector and/or the supporting member may be plate-like. The term "plate-like" as used herein is a broad term and is to be given its ordinary and customary meaning to a person of ordinary skill in the art and is not to be limited to a special or customized meaning. The term specifically may refer, without limitation, to an object that may be, typically, thin and/or flat with a shape that is wider than it is thick. Particularly then, the photosensitive detector and the supporting member may be parallel, particularly with a maximum deviation thereof of 5°, 4°, 3°, 2°, 1° or 0.5°. A distance between the photosensitive detector and the supporting member generated by the thermally insulating air gap may be between 1 µm and 1 mm, preferably ... , even more preferably....

The supporting member may be a substrate, particularly comprised by the detector module. The term "substrate" as used herein is a broad term and is to be given its ordinary and customary meaning to a person of ordinary skill in the art and is not to be limited to a special or customized meaning. The term specifically may refer, without limitation, to a material, typically a board and/or a wafer, that may be flat and/or board, on which at least one electronic component is attached. The substrate may provide a physical support structure for the at least one component. Alternatively or in addition, the substrate may also serve as a medium for the transfer of electrical signals.

The spacer may be or may comprise an electric conductor for conducting the generated detector signal. The term "electrical conductor" as used herein is a broad term and is to be given its ordinary and customary meaning to a person of ordinary skill in the art and is not to be limited to a special or customized meaning. The term specifically may refer, without limitation, to a material that allows electrical charges to flow through it. The electrical conductor may have a high density of free electrons, which then may move easily through the material in response to an electric field. The electric conductor may be at least one of: a bond wire, particularly comprising a metal; a bond pad, particularly comprising a metal. The "bond wire" may be a thin wire used to make an electrical connection between a plurality of points in a circuit. A bond wire may be, typically, comprise a metal, such as gold, aluminum and/or copper. A diameter of a bond wire may be less than 1 mm in diameter. The "bond pad" may be a small area that is designed to be used for wire bonding. Bond pads may, typically, be made of a metal, such as aluminum, gold and/or copper.

The thermal conductivity of the spacer thermally connecting the photosensitive detector and the supporting member may be below 0.1 W/(mK) (Watt per meter/Kelvin). The term "thermal conductivity" as used herein is a broad term and is to be given its ordinary and customary meaning to a person of ordinary skill in the art and is not to be limited to a special or customized meaning. The term specifically may refer, without limitation, to a measure of a material's ability to conduct heat. In particular accordance with the present invention, the thermal conductivity may refer to ability of the spacer to conduct heat, wherein the spacer acts as a medium for the transfer of heat between the photosensitive detector and the supporting member. The spacer may be or may comprise at least one thermally insulating material. A material may be considered as thermally insulating, when the thermal conductivity of the material may be below 0.1 W/(mK )(Watt per meter/Kelvin).

The thermally insulating material may be an adhesive. The term "adhesive" as used herein is a broad term and is to be given its ordinary and customary meaning to a person of ordinary skill in the art and is not to be limited to a special or customized meaning. The term specifically may refer, without limitation, to a substance that is used to bond at least two surfaces of respective objects together by creating a permanent and/or temporary bond. The adhesive may be and/or may comprise at least one of: epoxy, acrylic, silicone, polyurethane, cyanoacrylate.

For the detector module, reference may be made to any further aspect, Embodiment and/or definition as disclosed elsewhere herein.

In a further aspect of the present invention, a method for producing a detector module is disclosed. According to this method, a detector module as described elsewhere herein is produced by anisotropic etching; and/or stacking of materials. For the method for producing a detector module, reference may be made to any further aspect, Embodiment and/or definition as disclosed elsewhere herein.

The term "anisotropic etching" as used herein is a broad term and is to be given its ordinary and customary meaning to a person of ordinary skill in the art and is not to be limited to a special or customized meaning. The term specifically may refer, without limitation, to a type of an etching process in which material is selectively removed from a substrate, particularly in a non-uniform manner. Anisotropic etching may result in the formation of complex three-dimensional structures.

The term "stacking of material" as used herein is a broad term and is to be given its ordinary and customary meaning to a person of ordinary skill in the art and is not to be limited to a special or customized meaning. The term specifically may refer, without limitation, to a process of layering and/or stacking a plurality layers of the materials on top of each other, particularly for creating a composite structure.

In a further aspect of the present invention, a spectrometer device for determining at least one item of spectral information about at least one measurement object is disclosed. The spectrometer device comprising:
- at least one detector module as described elsewhere herein, wherein the at least one detector module is designated for receiving light from the at least one measurement object and, thereby, generating at least one detector signal;
- at least one evaluation unit, wherein the at least one evaluation unit is configured to determine at least one item of spectral information about the at least one measurement object by considering the detector signal.

For the spectrometer device, reference may be made to any further aspect, Embodiment and/or definition as disclosed elsewhere herein.

The term "measurement object", generally, refers to an arbitrary body, chosen from a living object and a non-living object, which comprises material for investigation by the spectrometer device. The term "spectrometer device" as used herein is a broad term and is to be given its ordinary and customary meaning to a person of ordinary skill in the art and is not to be limited to a special or customized meaning. The term specifically may refer, without limitation, to an apparatus which is configured to determine at least one item of spectral information spectral information. As generally used, the term "determining" or any grammatical variation thereof refers to a process of generating at least one representative result, in particular, by evaluating the at least one detector signal as acquired by the at least one photosensitive detector. The term "evaluating" or any grammatical variation thereof refers to an application of methods for deriving the at least one representative result from the at least one detector signal. As generally used, the term "spectral information" refers to at least one measured value which is obtained by recording at least one signal intensity related to at least one corresponding signal wavelength of the optical radiation and evaluating at least one detector signal which relates to the signal intensity.

The term "evaluation unit" as used herein is a broad term and is to be given its ordinary and customary meaning to a person of ordinary skill in the art and is not to be limited to a special or customized meaning. The term specifically may refer, without limitation, to an arbitrary device designed to generate the at least one desired item of information, in particular related to the spectrum of the object. For this purpose, the evaluation unit may be or may comprise one or more integrated circuits, such as one or more application-specific integrated circuits (ASICs), and/or one or more data processing devices, such as one or more of computers, digital signal processors (DSP), field programmable gate arrays (FPGA) preferably one or more microcomputers and/or microcontrollers, especially comprised by at least one mobile communication device, in particular selected from a smartphone, a tablet or a laptop; however further embodiments may also be feasible. Additional components may be comprised, such as one or more preprocessing devices and/or data acquisition devices, such as one or more devices for receiving and/or preprocessing of the detector signals, such as one or more AD-converters and/or one or more filters. As used herein, the detector signal is provided by the spectrometer device, in particular, by the detector array of the spectrometer device. Further, the evaluation unit may comprise one or more data storage devices. Further, the evaluation unit may comprise one or more interfaces, such as one or more wireless interfaces and/or one or more wire-bound interfaces.

The spectrometer device may, preferably, be configured to determine the at least one item of spectral information about at least one measurement object by spectrally analyzing the optical radiation which the at least one photosensitive detector may receive from the at least one measurement object. The spectrometer device may, preferably, be configured to determine the at least one item of spectral information about at least one measurement object by spectrally analyzing diffuse reflected optical radiation as generated by the at least one measurement object and directed towards the at least one photosensitive detector.

In a further aspect of the present invention, a computer program comprising instructions which, when the program is executed by the spectrometer device as described elsewhere herein, cause the evaluation unit of the spectrometer device to determine at least one item of spectral information about the at least one measurement object. For the computer program, reference may be made to any further aspect, Embodiment and/or definition as disclosed elsewhere herein.

Specifically, the computer program may be stored on a computer-readable data carrier and/or on a computer-readable storage medium. The computer program may be executed on at least one processor comprised by the spectrometer device.

In a further aspect of the present invention, a computer-readable storage medium is disclosed, wherein the computer-readable storage medium comprises instructions, which, when the program is executed by the spectrometer device as described elsewhere herein cause the evaluation unit of the spectrometer device to determine at least one item of spectral information about the at least one measurement object. For the computer-readable storage medium, reference may be made to any further aspect, Embodiment and/or definition as disclosed elsewhere herein.

As used herein, the terms "computer-readable data carrier" and "computer-readable storage medium" specifically may refer to non-transitory data storage means, such as a hardware storage medium having stored thereon computer-executable instructions. The stored computer-executable instruction may be associate with the computer program. The computer-readable data carrier or storage medium specifically may be or may comprise a storage medium such as a random-access memory (RAM) and/or a read-only memory (ROM).

In a further aspect of the present invention, a non-transient computer-readable medium is disclosed, wherein the non-transient computer-readable medium includes instructions that, when executed by one or more processors of an evaluation unit of a spectrometer device as described elsewhere herein cause one or more processors to determine at least one item of spectral information about the at least one measurement object by considering a detector signal. For the non-transient computer-readable medium, reference may be made to any further aspect, Embodiment and/or definition as disclosed elsewhere herein.

To avoid limit the disturbing effect of the temperature drift seen in the previous chapter, the PbS pixels can be thermally isolated. This is achieved by reducing the thermal connections from the active measurement area to the surrounding environment.

As used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not repeated, nonwithstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

The spectrometer device and the method according to the present invention, in one or more of the above-mentioned embodiments and/or in one or more of the embodiments described in further detail below, provide a large number of advantages over known devices and methods of similar kind. The present invention particularly provides a detector module that shows minimized drifting effects.

The minimized drifting effects may be made possible by using Micro-Electro-Mechanical Systems (MEMS) technology for generating a micro-bridge style setup that may be used to thermally isolate the detector module, particularly by generating an air gap between the detector module and a supporting member. Since air has a significantly lower thermal conductance than glass or silicon substrate, a thermal transfer to the system, particularly the detector module, from an environment, particularly a light source comprised by the spectrometer device, may significantly be reduced in a manner that unwanted heat-up effects are suppressed.

Summarizing, in the context of the present invention, the following embodiments are regarded as preferred:
Embodiment 1. A detector module for detecting light, particularly by using a spectrometer device, and, thereby, generating at least one detector signal, the detector module comprises:
   - at least one photosensitive detector designated for generating at least one detector signal when illuminated by light;
   - at least one spacer, wherein the spacer supports the photosensitive detector in manner that at least one thermally insulating air gap is generated between the photosensitive detector and at least one supporting member for thermally decoupling the photosensitive detector from an environment.
Embodiment 2. The detector module according to the preceding embodiment, wherein the photosensitive detector is or comprises at least one photosensitive region.
Embodiment 3. The detector module according to the preceding embodiment, wherein the photosensitive region comprises at least one photoconductive material.
Embodiment 4. The detector module according to the preceding embodiment, wherein the photoconductive material is or comprises at least one inorganic photoconductive material.
Embodiment 5. The detector module according to any one of the two preceding embodiments, wherein the photoconductive material is or comprises at least one of:
   - lead sulfide (PbS);
   - lead selenide (PbSe);
   - germanium (Ge);
   - indium gallium arsenide (InGaAs);
   - indium antimonide (InSb);
   - mercury cadmium telluride (HgCdTe or MCT).
Embodiment 6. The detector module according to any one of the preceding embodiments, wherein the photosensitive detector and supporting member are parallel with a maximum deviation thereof of 5°, 4°, 3°, 2°, 1° or 0.5°.
Embodiment 7. The detector module according to any one of the preceding embodiments, wherein a distance between the photosensitive detector and the supporting member generated by the thermally insulating air gap is between 1 µm and 1 mm.
Embodiment 8. The detector module according to any one of the preceding embodiments, wherein the photosensitive detector and the supporting member are separated from each other, particularly by the spacer.
Embodiment 9. The detector module according to any one of the preceding embodiments, wherein the supporting member is a substrate, particularly comprised by the detector module.
Embodiment 10. The detector module according to any one of the preceding embodiments, wherein the supporting member comprises a surface for placing the spacer.
Embodiment 11. The detector module according to the preceding embodiment, wherein the spacer is or comprises an electric conductor for conducting the generated detector signal.
Embodiment 12. The detector module according to the preceding embodiment, wherein the electric conductor is at least one of:
   - bond wire, particularly comprising a metal;
   - bond pad, particularly comprising a metal.
Embodiment 13. The detector module according to the preceding embodiment, wherein the spacer is or comprises at least one thermally insulating material.
Embodiment 14. The detector module according to the preceding embodiment, wherein the thermally insulating material is an adhesive.
Embodiment 15. A method for producing a detector module, wherein a detector module according to any one of the preceding embodiments referring to a detector module is produced by at least one of:
   - anisotropic etching;
   - stacking of materials.
Embodiment 16. A spectrometer device for determining at least one item of spectral information about at least one measurement object, the spectrometer device comprising:
   - at least one detector module according to any one of the preceding embodiments referring to a detector module, wherein the at least one detector module is designated for receiving light from the at least one measurement object and, thereby, generating at least one detector signal;
   - at least one evaluation unit, wherein the at least one evaluation unit is configured to determine at least one item of spectral information about the at least one measurement object by considering the detector signal.
Embodiment 17. A computer program comprising instructions which, when the program is executed by the spectrometer device according to any one of the preceding embodiments referring to a spectrometer device cause the evaluation unit of the spectrometer device to determine at least one item of spectral information about the at least one measurement object.
Embodiment 18. A computer-readable storage medium comprising instructions which, when the program is executed by the spectrometer device according to any one of the preceding embodiments referring to a spectrometer device cause the evaluation unit of the spectrometer device to determine at least one item of spectral information about the at least one measurement object.
Embodiment 19. A non-transient computer-readable medium including instructions that, when executed by one or more processors of an evaluation unit of a spectrometer device according to any one of the preceding embodiments referring to a spectrometer device cause one or more processors to determine at least one item of spectral information about the at least one measurement object by considering a detector signal.

### Brief description of the figures

Further optional details and features of the invention are evident from the description of preferred exemplary embodiments which follows in conjunction with the dependent Embodiments. In this context, the particular features may be implemented alone or in any reasonable combination. The invention is not restricted to the exemplary embodiments. The exemplary embodiments are shown schematically in the figures. Identical reference numerals in the individual figures refer to identical elements or elements with identical function, or elements which correspond to one another with regard to their functions. In the Figures:
- Figure 1: shows a typical drifting effect of a spectrometer device from the prior art;
- Figure 2: shows an exemplary spectrometer device;
- Figure 3a-3b: show a further exemplary detector module; and
- Figure 4: shows a further exemplary detector module.

### Exemplary embodiments

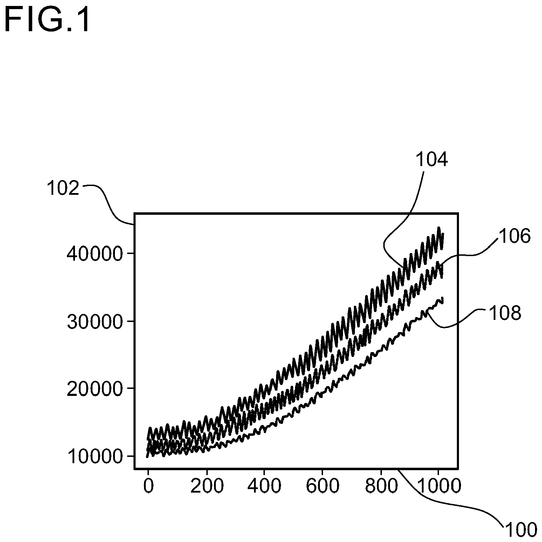

Figure 1 illustrates a typical temperature drifting effect over time which is caused by a self-heating of a detector module comprised by a spectrometer device. On the horizontal axis 100 the consecutive time frames of the spectrometer device are depicted. On the vertical axis 102 the signal intensity 104, 106, 108 of the raw detector signal for the respective frame is depicted in arbitrary unit. Three different signal intensities 104, 106, 108 are depicted for different temperature drifts each. The signal intensity 104 is associated with a strong temperature drift, the signal intensity 106 is associated with a medium temperature drift of approximately 1 K/s and the signal intensity 108 is associated with a small temperature drift. As may be derived from Figure 1, different temperature drifts make the analysis of the measurement signal difficult. The present invention mitigates this problem by significantly reducing the temperature drifts. With thermal isolation, the signal drift is expected to be significantly reduced and the following light intensity analysis of higher quality.

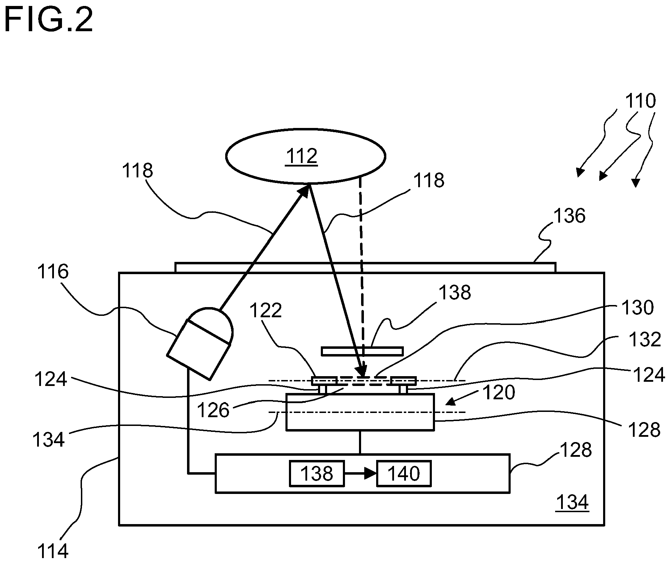

Figure 2 illustrates, in a highly schematic fashion, an exemplary spectrometer device 110 according to the present invention. The spectrometer device 110 is an apparatus which is configured to determine at least one item of spectral information about at least one measurement object 112. The measurement object 112 may be or comprise an arbitrary body, chosen from a living object and a non-living object, which comprises material for investigation or monitoring by the spectrometer device 110.

According to the present invention, the spectrometer device 110 may be adapted for recording a spectrum, particularly in the infrared (IR) spectral region, especially in the near-infrared (NIR), specifically for a wavelength of 760 nm to 3 µm, preferably of 1 µm to 5 µm, more preferred of 1 µm to 3 µm, or in the mid-infrared spectral region which covers wavelengths from 5 µm to 15 µm. Accordingly, the spectrometer device 110 can be used for monitoring or investigation purposes, such as spectroscopy, gas sensing, or concentration measurements. However, further applications of the spectrometer device 110 may also be feasible.

As depicted in Figure 2, the spectrometer device 110 may comprise a housing 114 which encompasses the components of the spectrometer device 110. In this fashion, the components of the spectrometer device 110 can be protected and access of external light may be impeded. Further, the housing 114 can, preferably, be filled with an optically transparent medium, wherein the optically transparent medium 134 may, especially, be selected from ambient air, an inert gas or vacuum, especially in order to facilitate a propagation of the light beam within the housing 114. However, different kind of materials may also be feasible. However, further kinds of arrangements of the components of the spectrometer device 110 may also be conceivable.

The exemplary spectrometer device 110 as schematically depicted in Figure 1 may comprise a radiation emitting element 116 which is configured to emit the light 118. Herein, the radiation emitting element 116 may comprise by a semiconductor-based radiation source, preferably, selected from at least one of a light emitting diode (LED) or a laser, in particular a laser diode. However, a further type of radiation emitting element 116 may also be feasible. The radiation emitting element 116 may be continuously emitting, or generating modulated optical pulses, as described above in more detail. The radiation emitting element 116 may be configured for emitting the light 118 isotropically in all spatial directions. However, the radiation emitting element 116 may, preferably, be designed for emitting the light 118 anisotropically in at least one spatial direction, specifically towards the at least one measurement object 112, such as by generating at least one light beam.

The exemplary spectrometer device 110 as illustrated in Figure 2, further, may comprise an optical window 136. The at least one window 136may be at least partially, preferably fully, transparent for the light 118. Herein, at least one transparent material as comprised by the optical window 136 may, preferably, be selected from glass or silicon and may, therefore, preferably be at least partially, preferably fully, transparent in at least a partition of a wavelength range covered by the light 118. The optical window 136 may, especially be located in a portion of the housing 114 of the spectrometer device 110, specifically in a portion of a beam path of the light 118 between the radiation emitting element 116 and the at least one measurement object 112 and, further, in a further portion of the beam path of the optical radiation 118 between the at least one measurement object 112 and at least one detector module 120.

As further schematically illustrated in Figure 2, the spectrometer device 110 may, further, comprise a filter element 138, such as a polarization filter element or a bandpass filter element, however, a further kind of filter element 138 may also be feasible. The filter element 138 may, especially, be designed for filtering the light 118 or, more specifically, selected wavelengths of the light 118. For this purpose, the filter element 138 may, specifically, be positioned in the beam path of the light 118 in front of the detector module 120. In further embodiments (not depicted here), the filter element 138 may also be dispensable.

Further, the exemplary spectrometer device 110 as schematically illustrated in Figure 1 comprises a detector module 120 for detecting light and, thereby, generating at least one detector signal. The detector module comprises:
- at least one photosensitive detector 122 designated for generating at least one detector signal when illuminated by light;
- at least one spacer 124, wherein the spacer supports the photosensitive detector 122 in manner that at least one thermally insulating air gap 126 is generated between the photosensitive detector 122 and at least one supporting member 128 for thermally decoupling the photosensitive detector from an environment.

The photosensitive detector 122 may comprise at least one photosensitive region 130, which may comprise at least one photoconductive material. Alternatively, the photosensitive detector 122 may be the at least one photosensitive region 130, particularly in a manner that the entire photosensitive detector 122 is the at least one photosensitive region 130.

The photoconductive material may be or may comprise at least one inorganic photoconductive material. The photoconductive material may be or may comprise at least one of:
- lead sulfide (PbS);
- lead selenide (PbSe);
- germanium (Ge);
- indium gallium arsenide (InGaAs);
- indium antimonide (InSb);
- mercury cadmium telluride (HgCdTe or MCT).

As may be derived from Fig. 1, the photosensitive detector 122 and supporting member 128 may be parallel with a maximum deviation thereof of 5°, 4°, 3°, 2°, 1° or 0.5°. The photosensitive detector 122 and supporting member 128 may be parallel in a manner that a central axis 132 of the photosensitive detector 122 and a central axis 134 of the supporting member 128 may be parallel.

The photosensitive detector 120 and the supporting member 128 are separated from each other, particularly by the spacer 126 that is generating the air gap 126. The supporting member 128 may be a substrate, particularly comprised by the detector module 120. The supporting member 128 comprises a surface for placing the spacer 126. The spacer may be or may comprise at least one thermally insulating material. A typical distance between the photosensitive detector and the supporting member generated by the thermally insulating air gap may be between 1 µm and 1 mm.

The exemplary spectrometer device 110 as schematically illustrated in Figure 1 further comprises at least one evaluation unit 142, wherein the at least one evaluation unit 142 is configured to determine at least one item of spectral information about the at least one measurement object 112 by considering the detector signal.

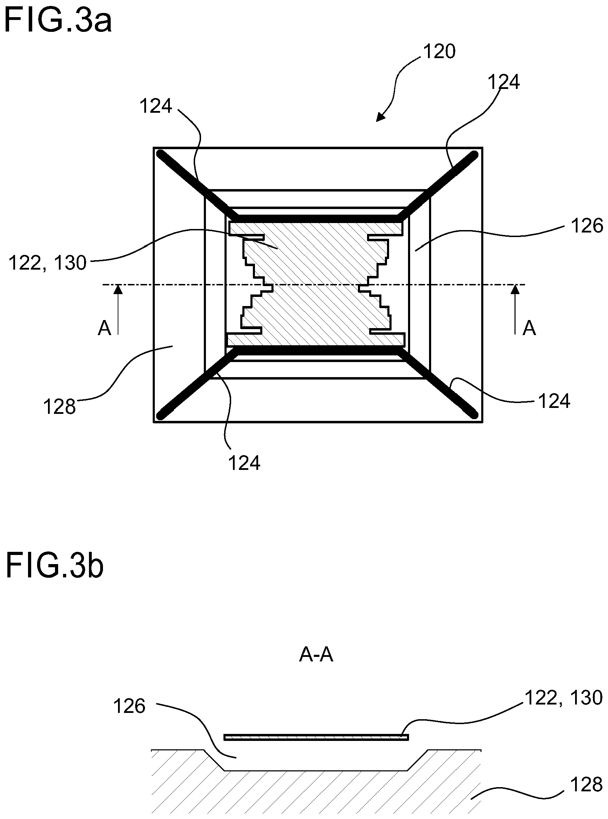

Figure 3a illustrates, in a highly schematic fashion, a top view on an exemplary detector module 120 according to the present invention. Figure 3b illustrates a cross section of the exemplary detector module 120 of Figure 3a at the interface A-A. The detector module 120 comprises at least one photosensitive detector 122. The photosensitive detector 122 may be at least one photosensitive region 130 comprising photoconductive material. The photoconductive material may be lead sulfide (PbS).

The detector module 120 comprises at least one, particularly a plurality of spacers 124, that support the photosensitive detector 122 in manner that at least one thermally insulating air gap 126 is generated between the photosensitive detector 122 and at least one supporting member 128 for thermally decoupling the photosensitive detector from an environment. The spacer may be an electric conductor for conducting the generated detector signal. Alternatively, the spacer may comprise an electric conductor (not depicted). The electric conductor may be a bond wire, particularly comprising a metal. Alternatively, the spacer 124 may be a bond pad, particularly comprising a metal (not depicted). The supporting member 128 is a substrate. The substrate is a silicon substrate or glass substrate.

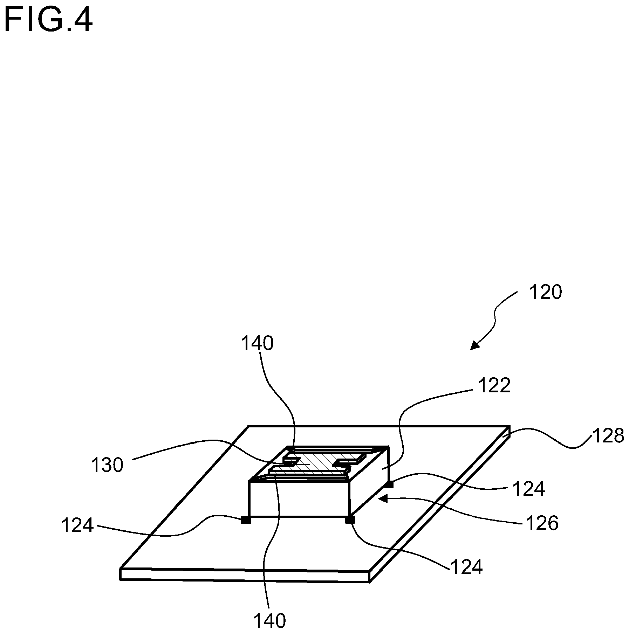

Figure 4 illustrates, in a highly schematic fashion, a further exemplary detector module 120 according to the present invention. The detector module 120 may comprise at least one photosensitive detector 122. The photosensitive detector 122 may comprise at least one photosensitive region 130. The air gap 126 generating at least one spacer 124, particularly a plurality of spacers 124, may be an adhesive, particularly a thermally insulating adhesive. The spacer 124 may be a thermally isolating glue ball. The electric conductor 140, specifically the bond wires, for conducting the generated detector signal are separate of the spacer 124. The supporting member 128 is a substrate.

The detector module 120 may be produced by at least one of: anisotropic etching; stacking of materials.

Further disclosed herein is, a computer program comprising instructions which, when the program is executed by the spectrometer device 110 cause the evaluation unit 142 of the spectrometer device 110 to determine at least one item of spectral information about the at least one measurement object 112.

Further disclosed herein is, a computer-readable storage medium comprising instructions which, when the program is executed by the spectrometer device 110 cause the evaluation unit 142 of the spectrometer device 110 to determine at least one item of spectral information about the at least one measurement object 112.

Further disclosed herein is, a non-transient computer-readable medium including instructions that, when executed by one or more processors of an evaluation unit 142 of the spectrometer device 110 one or more processors to determine at least one item of spectral information about the at least one measurement object 112 by considering the detector signal.

### List of reference numbers

- 100: horizontal axis
- 102: vertical axis
- 104: signal intensity
- 106: signal intensity
- 108: signal intensity
- 110: spectrometer device
- 112: measurement object
- 114: housing
- 116: radiation emitting element
- 118: light
- 120: detector module
- 122: photosensitive detector
- 124: spacer
- 126: air gap
- 128: supporting member
- 130: photosensitive region
- 132: central axis of the photosensitive detector
- 134: central axis of the supporting member
- 136: optical window
- 138: filter element
- 140: separate electric conductor
- 142: evaluation unit

## Claims

1. A detector module (120) for detecting light (118) and, thereby generating at least one detector signal, the detector module (120) comprises:
- at least one photosensitive detector (122) designated for generating at least one detector signal when illuminated by light (118);
- at least one spacer (124), wherein the spacer (124) supports the photosensitive detector (122) in manner that at least one thermally insulating air gap (126) is generated between the photosensitive detector (122) and at least one supporting member (128) for thermally decoupling the photosensitive detector (122) from an environment.

2. The detector module (120) according to the preceding claim, wherein the photosensitive detector (122) is or comprises at least one photosensitive region (130), wherein the photosensitive region (130) comprises at least one photoconductive material.

3. The detector module (120) according to any one of the two preceding claims, wherein the photoconductive material is or comprises at least one of:
- lead sulfide;
- lead selenide;
- germanium;
- indium gallium arsenide;
- indium antimonide;
- mercury cadmium telluride.

4. The detector module (120) according to any one of the preceding claims, wherein the photosensitive detector (122) and the supporting member (128) are separated from each other by the spacer (124).

5. The detector module (120) according to any one of the preceding claims, wherein the supporting member (128) is a substrate.

6. The detector module (120) according to any one of the preceding claims, wherein the supporting member (128) comprises a surface for placing the spacer (124).

7. The detector module (120) according to the preceding claim, wherein the spacer (124) is or comprises an electric conductor for conducting the generated detector signal.

8. The detector module (120) according to the preceding claim, wherein the electric conductor is at least one of:
- bond wire;
- bond pad.

9. The detector module (120) according to the preceding claim, wherein the spacer (124) is or comprises at least one thermally insulating material.

10. The detector module (120) according to the preceding claim, wherein the thermally insulating material is an adhesive.

11. A method for producing a detector module (120), wherein a detector module (120) according to any one of the preceding claims referring to a detector module (120) is produced by at least one of:
- anisotropic etching;
- stacking of materials.

12. A spectrometer device (110) for determining at least one item of spectral information about at least one measurement object (112), the spectrometer device (110) comprising:
- at least one detector module (120) according to any one of the preceding claims referring to a detector module (120), wherein the at least one detector module (120) is designated for receiving light (118) from the at least one measurement object (112) and, thereby, generating at least one detector signal;
- at least one evaluation unit (142), wherein the at least one evaluation unit (142) is configured to determine at least one item of spectral information about the at least one measurement object (112) by considering the detector signal.

13. A computer program comprising instructions which, when the program is executed by the spectrometer device (110) according to any one of the preceding claims referring to a spectrometer device (110) cause the evaluation unit (142) of the spectrometer device (110) to determine at least one item of spectral information about the at least one measurement object (112).

14. A computer-readable storage medium comprising instructions which, when the program is executed by the spectrometer device (110) according to any one of the preceding claims referring to a spectrometer device (110) cause the evaluation unit (142) of the spectrometer device (110) to determine at least one item of spectral information about the at least one measurement object (112).

15. A non-transient computer-readable medium including instructions that, when executed by one or more processors of an evaluation unit (142) of a spectrometer device (110) according to any one of the preceding claims referring to a spectrometer device (110) cause one or more processors to determine at least one item of spectral information about the at least one measurement object (112) by considering a detector signal.
